# EUROPÄISCHE PATENTANMELDUNG

(11) **EP 4 006 207 A1**
(43) Veröffentlichungstag der Anmeldung: **01.06.2022**
(21) Anmeldenummer: 21159855.2
(22) Anmeldetag: 01.03.2021
(51) Int. Cl.: C25B 1/04, C25B 15/021, C25B 15/08

(54) **VERFAHREN ZUM BETREIBEN EINER ELEKTROLYSEVORRICHTUNG UND ELEKTROLYSEVORRICHTUNG**

(30) Priorität: 25.11.2020 DE 102020214812
(71) Anmelder: Siemens Energy Global GmbH & Co. KG, 81739 München (DE)
(72) Erfinder: Tremel, Alexander, 91096 Möhrendorf (DE); Wolf, Erik, 91341 Röttenbach (DE)

(57) **Zusammenfassung**

Die Erfindung betrifft ein Verfahren zum Betreiben einer Elektrolysevorrichtung (2) zum Zerlegen von Wasser sowohl bei hohen als auch bei niedrigen Umgebungstemperaturen. Das Verfahren weist folgende Schritte auf:
- Bereitstellen wenigstens einer Elektrolyseeinheit (3), umfassend wenigstens eine Elektrolysezelle, mit wenigstens einer Eingangsöffnung (6) für einen ersten Eduktstrom (4) und mit wenigstens einer Ausgangsöffnung (8) für einen ersten Produktstrom,
- Herstellen des ersten Produktstroms (P) aus dem ersten Eduktstrom (4) in der Elektrolyseeinheit (3),
- Trennen des Prduktstroms (P) in einen Wasserstrom (W) und einen Gasstrom (G),
- Kühlen des Wasserstroms (W), indem er in wenigstens eine Kühlvorrichtung (20) eingeleitet wird, in der die Wärme des Wasserstroms (W) direkt an die Umgebung abgegeben wird,
- Unterbrechen der Kühlung des Wasserstroms (W) im Falle eines Abschaltens der Elektrolyseeinheit (3) oder im Stand-By-Betrieb der Elektrolyseeinheit (3), und
- Erfassen der Umgebungstemperatur und wenn die Umgebungstemperatur nahe am Gefrierpunkt ist, Entleeren des Wasserstroms (W) aus der Kühlvorrichtung (20) in einen Flüssigkeitsspeicher.

## Beschreibung

Die Erfindung betrifft ein Verfahren zum Betreiben einer Elektrolysevorrichtung und eine solche Elektrolysevorrichtung.

Die Elektrolyse erzeugt während des Prozesses der Wasserspaltung infolge von elektrischen Widerstandsverlusten Wärme. Diese Wärme muss abgeführt werden, um ein Überhitzen des Systems zu verhindern. Die Wärmeabfuhr erfolgt dabei i.d.R. von dem inneren Prozesswasserkreislauf, aus dem durch den Wasserspaltungsprozess Wasserstoffgas und Sauerstoffgas gewonnen werden, mit Hilfe eines Wärmeaustauschers auf einen weiteren Fluidkreislauf (z.B. einer Wasser-Glykol-Mischung). Dieser zweite Fluidkreislauf überträgt den Wärmestrom an die Umgebung (z.B. Luft, Flusswasser, Untergrund).

In der Regel ist der innere Prozesswasserkreislauf in zwei Kreisläufe aufgeteilt: einen O₂-seitigen Kreislauf und einen H₂-seitigen Kreislauf mit jeweils einem Wärmetauscher. Der Wärmestrom in jedem der Kreisläufe fällt bei einem relativ niedrigen Temperaturniveau von zw. 40°C und 70°C an. In Regionen mit hohen Umgebungstemperaturen (>30°C oder sogar >40°C) ist damit die Abgabe der Verlustwärme an die Umgebung ein großes Problem. In solchen Regionen lässt sich die Situation nur mit große Wärmeaustauschflächen ausgleichen. Ab einer bestimmten Umgebungstemperatur, insbesondere >40°C, ist es jedoch u.U. nicht mehr möglich, die Kühlleistung aufrecht zu erhalten.

Um in Regionen mit hoher Umgebungstemperatur eine effektive Kühlung des Elektrolysesystems zu ermöglichen, wird aktuell über eine sehr aufwendige und kostenintensive Kompressionskühlung ein vorgekühltes Fluid bereitgestellt ("Kühlschrankeffekt") bzw. es wird Wasser auf die Kühler eingedüst, um über Verdunstungseffekte einen zusätzlichen Kühleffekt zu erzeugen. Die hohen Anschaffungskosten bzw. die entstehenden Wasserverluste lassen Projekte in diesen Regionen nur schwer profitabel werden. Darüber hinaus trägt der erhebliche Energieverbrauch bei der Kompressionskühlung zu einer deutlichen Verschlechterung des Wirkungsgrades bei, was die Wirtschaftlichkeit weiter sinken lässt.

Aufgabe der Erfindung ist es daher, eine Elektrolysevorrichtung zu schaffen, bei der die Kühlung kostengünstig und technisch einfach zu realisieren ist, wobei die Elektrolysevorrichtung für den Betrieb sowohl bei hohen als auch bei niedrigen Umgebungstemperaturen geeignet ist.

Erfindungsgemäß ist ein Verfahren zum Betreiben einer Elektrolysevorrichtung zum Zerlegen von Wasser mit folgenden Schritten vorgesehen:
- Bereitstellen wenigstens einer Elektrolyseeinheit, umfassend wenigstens eine Elektrolysezelle, mit wenigstens einer Eingangsöffnung für einen ersten Eduktstrom und mit wenigstens einer Ausgangsöffnung für einen ersten Produktstrom,
- Herstellen des ersten Produktstroms aus dem ersten Eduktstrom in der Elektrolyseeinheit,
- Trennen des Produktstroms in einen Wasserstrom und einen Gasstrom,
- Kühlen des Wasserstroms, indem er in wenigstens eine Kühlvorrichtung eingeleitet wird, in der die Wärme des Wasserstroms direkt an die Umgebung abgegeben wird,
- Unterbrechen der Kühlung des Wasserstroms im Falle eines Abschaltens der Elektrolyseeinheit oder im Stand-By-Betrieb der Elektrolyseeinheit, und
- Erfassen der Umgebungstemperatur und wenn die Umgebungstemperatur nahe am Gefrierpunkt ist, Entleeren des Wasserstroms aus der Kühlvorrichtung in einen Flüssigkeitsspeicher.

Die Aufgabe wird weiterhin erfindungsgemäß gelöst durch eine Elektrolysevorrichtung zum Zerlegen von Wasser umfassend:
- eine Elektrolyseeinheit, umfassend wenigstens eine Elektrolysezelle, mit wenigstens einer Eingangsöffnung für einen ersten Eduktstrom und mit wenigstens einer Ausgangsöffnung für einen ersten Produktstrom,
- wenigstens einen Gas-Wasser-Separator zum Trennen des Produktstroms in einen Wasserstrom und einen Gasstrom,
- eine Kühlvorrichtung zum Kühlen des Wasserstroms, die für eine direkte Abgabe der Wärme des Wasserstrom an die Umgebung ausgelegt ist,
- eine Steuereinheit, die dafür ausgebildet ist, die Kühlung des Wasserstroms im Falle eines Abschaltens der Elektrolyseeinheit oder im Stand-By-Betrieb der Elektrolyseeinheit zu unterbrechen, und
- eine Temperaturmessvorrichtung zum Erfassen der Umgebungstemperatur, wobei die Steuereinheit dafür eingerichtet ist, wenn die Umgebungstemperatur nahe am Gefrierpunkt ist, den Wasserstrom aus der Kühlvorrichtung in einen Flüssigkeitsspeicher zu entleeren.

Erfindungsgemäß wird die Elektrolyseverlustwärme mittels Wärmetauscher bzw. Kühlverrichtungen direkt aus dem Prozesswasserkreislauf und ohne ein weiteres Wärmeträgermedium gegen die Umgebung (Luft, Flusswasser, Untergrund, etc.) gekühlt. Es wird dabei auf einen weiteren Kühlfluid-Zwischenkreis verzichtet, d.h. das produktseitige Wasser, weiterhin auch als Prozesswasser bezeichnet, wird direkt gegen z.B. die Umgebungsluft gekühlt. Auch bei hohen Außentemperaturen ist eine ausreichend große Temperaturdifferenz zwischen Prozesswasser (50-60°C) und Außenluft (z.B. 40°C) vorhanden, wodurch eine effiziente Kühlung gewährleistet ist. Damit solche Kühlvorrichtungen eingesetzt werden können, müssen jedoch bestimmte technische Vorkehrungen getroffen werden. Die direkte Kühlung des Prozesswassers (ohne Frostschutzmittel, wie z.B. Glykol) führt allerdings zur Frostgefahr in der Kühlvorrichtung bzw. in den Leitungen, falls die Außentemperaturen unter den Gefrierpunkt von 0 °C fallen. Der zu kühlende Wasserstrom ist Reinstwasser und kann somit gefrieren, wobei durch die Volumenausdehnung das Kühlsystem beschädigt werden kann. Darüber hinaus muss das zu kühlende Prozesswasser in der Kühlervorrichtung auch bei Anlagenstillständen vor Frost geschützt werden. Insbesondere wird die Kühlvorrichtung vor Umwelteinflüssen geschützt, z.B. über eine Jalousie, eine frostsichere Einhausung (wie Gebäude), über Beheizung, über das Einbinden eines Wärmespeichers, etc.. Im Stillstand der Elektrolysevorrichtung, wenn keine Kühlung erforderlich ist, jedoch die Umgebungstemperatur nahe 0 °C oder darunter liegt, wird daher die Kühlvorrichtung entleert und zwischengespeichert. Das Reinwasser aus der Kühlvorrichtung wird dabei für die Dauer des Stillstands der Elektrolyseeinheit in einem Flüssigkeitsspeicher (innenstehend oder isoliert bzw. beheizt bei Außenaufstellung) zwischengespeichert.

Gemäß einer bevorzugten Ausführungsvariante wird die Kühlvorrichtung durch einen Höhenunterschied zwischen der Kühlvorrichtung und dem Flüssigkeitsspeicher entleert. Hierzu ist die Kühlvorrichtung z.B. in einer schrägen Stellung angeordnet, um damit den Entleervorgang zu vereinfachen.

Vorteilhafterweise wird das Wasser in der entleerten Kühlvorrichtung durch ein Gas ersetzt. Das Gas ist erforderlich zur Vermeidung eines Unterdrucks bzw. zur Aufrechterhaltung eines definierten Überdrucks im System, Das Gas könnte ein Prozessgas sein oder z.B. ein Intertgas.

Gemäß einer weiteren bevorzugten Ausführungsvariante, alternativ oder ergänzend zum Entleeren aufgrund des Höhenunterschieds, wird die Kühlvorrichtung durch Beaufschlagen mit einem unter Druck stehenden Gas, welches insbesondere ein Prozessgas ist, entleert. Hierzu kann insbesondere auf das bereits in der Elektrolysevorrichtung befindliche Produktgas, welches in der Regel in einem Gasspeicher gespeichert ist, zurückgegriffen werden. Auf der Anodenseite wird insbesondere Druckluft zur Verdrängung des Prozesswassers für den Kühlkreislauf verwendet.

Im Hinblick auf eine konstruktiv besonders einfache Ausführung wird als Flüssigkeitsspeicher bevorzugt der Gas-Wasser-Separator verwendet.

Alternativ oder ergänzend zur Nutzung des Gas-Wasser-Separators als Flüssigkeitsspeicher, insbesondere wenn das Volumen des Gas-Wasser-Separators nicht ausreichend ist, wird als Flüssigkeitsspeicher vorzugsweise ein zusätzlicher Behälter eingesetzt, der beispielsweise zwischen dem Gas-Wasser-Separator und der Kühlvorrichtung angeordnet ist.

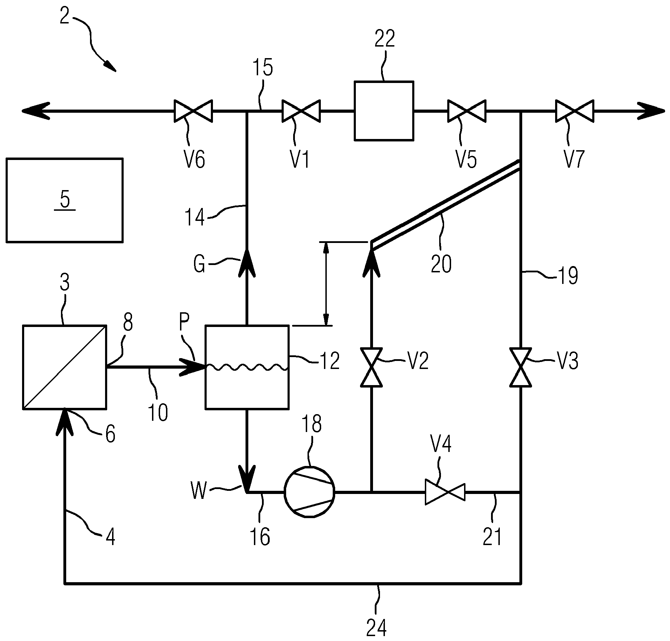

Ausführungsbeispiele der Erfindung werden anhand einer Zeichnung näher erläutert. Hierin zeigt die einzige Figur eine Elektrolysevorrichtung 2 (PEM- oder Alkali-Elektrolysevorrichtung) mit einer Elektrolyseeinheit 3 umfassend mindestens eine hier nicht näher gezeigte Elektrolysezelle zum Zerlegen von Wasser. Die Elektrolysevorrichtung 2 umfasst zudem eine Steuereinheit 5, die in der Figur symbolisch dargestellt ist. Die Steuereinheit 5 steuert die einzelnen Komponenten der Elektrolysevorrichtung 2 in Abhängigkeit von diversen hinterlegten, berechneten oder erfassten Parametern.

In die Elektrolyseeinheit 3 wird ein erster Eduktstrom 4 durch eine Eingangsöffnung 6 eingeführt. Die Elektrolyseeinheit 3 weist außerdem mindestens eine erste Ausgangsöffnung 8 für einen Produktstrom P, der aus dem Eduktstrom 4 in der Elektrolyseeinheit 3 hergestellt wird und über eine Produktleitung 10, die mit der Ausgangsöffnung 8 verbunden ist, aus der Elektrolyseeinheit 3 hinausgeführt wird. Der nachfolgend beschriebene Aufbau der Elektrolysevorrichtung 2 kann sowohl kathoden- als auch anodenseitig vorgesehen sein. Insbesondere ist dar in der Figur gezeigte Aufbau kathoden- und anodenseitig vorhanden, obwohl durch eine Seite dargestellt ist.

Der Produktstrom P stellt ein Fluidgemisch dar, bestehend aus einer Flüssigkeit, in diesem Fall Wasser, und einem Gas (Wasserstoff auf der Kathodenseite, Sauerstoff auf der Anodenseite). Nach dem Ableiten des Produktstroms P aus der Elektrolyseeinheit 3 wird dieser in einem Gas-Wasser-Separator 12 in einen Gasstrom G und einen Wasserstrom W geteilt. Der Gas-Wasser-Separator 12 kann unter Druck arbeiten, jedoch ist auch eine drucklose Ausführung möglich, bei der die Trennung des Gases von der Flüssigkeit (Wasser) durch die Schwerkraft erfolgt.

Der Gasstrom G wird über die Gasleitung 14 im geöffneten Zustand des Ventils V6, welches in der Gasleitung 14 eingebaut ist, zu einer nicht gezeigten Gasabnahme weitergeleitet und verlässt die Elektrolysevorrichtung 2. Hierzu bleibt ein Ventil V1, welches in einer Abzweigung 15 der Gasleitung 14 integriert ist, geschlossen. Beim geöffneten Zustand des Ventils V1 wird das Gas in einen Gasspeicher 22, in den die Leitung 15 mündet, hineingeleitet.

Der vom Gasstrom G separierte Wasserstrom W wird über eine Wasserleitung 16 mit Hilfe einer Zirkulationspumpe 18 über ein geöffnetes Ventil V2 in eine Kühlvorrichtung 20 (Wärmetauscher) gefördert und gibt dort seine Wärme direkt an die Umgebung ab.

Über eine Rezirkulationsleitung 19 bei einem geöffneten Ventil V3 gelangt der Wasserstrom W nach der Kühlvorrichtung 20 zurück zur Elektrolyseeinheit 3, um gekühlt erneut am Elektrolyseprozess teilzunehmen.

Zur Aufnahme des aus der Kühlvorrichtung 20 kommenden Fluides kann an Stelle des druckfesten Gas-Wasser-Separators 12 ein Vorratsbehälter mit niedrigem Druck bzw. drucklos verwendet werden, wobei eine Wasserpumpe das zwischengelagerte Wasser W in den Kühlkreislauf fördert.

Mit Hilfe der Bypass-Leitung 24 mit dem Ventil V4 kann die Kühlvorrichtung 20 teilweise bis vollständig umgangen werden. Die Bypass-Leitung 24 dient der Regelung der Fluidtemperatur am Eintritt der Elektrolyseeinheit 3. Die in der Figur gezeigte Position des Ventils V4 stellt nur eine von vielen möglichen Ausführungen dar: es kann z.B. vor dem Ventil V2, nach dem Ventil V3, nach dem Ventil V2 oder zwischen den Ventilen V2 und V3 angeordnet sein. V4 ist regelbar in Abhängigkeit der Temperatur des Prozesswassers, dient aber auch zum Anfahren bzw. Vorwärmen der Elektrolysevorrichtung 2. Auch eine temperaturabhängige Regelung der Ventile? V2 und V3 ist denkbar.

Im Falle eines Abschaltens der Elektrolyseeinheit 3 oder im Stand-By-Betrieb bei einer sehr niedrigen Leistung der Elektrolyseeinheit 3 ist eine Kühlung des Prozesswassers W nicht mehr erforderlich. Dessen Kühlung in der Kühlvorrichtung 20 wird daher unterbrochen. Gleichzeitig wird über eine hier nicht näher gezeigte Temperaturmessvorrichtung die Umgebungstemperatur erfasst. Wenn die Umgebungstemperatur nahe am Gefrierpunkt ist oder darunter liegt, kann das Prozesswasser W jedoch einfrieren und somit die Elektrolysevorrichtung 2 beschädigen. Aus diesem Grund wird die Umgebungstemperatur erfasst und, wenn diese nahe am Gefrierpunkt ist, insbesondere unterhalb von 1° liegt, sorgt die Steuereinheit (5) dafür, dass die Kühlvorrichtung 20 und ggf. Teile der Zu- und Ableitungen entwässert werden.

Eine Möglichkeit dafür besteht in einer forcierten "Entwässerung" mit Druckgas, indem das Gas aus dem Gasspeicher 22 dafür verwendet wird. In einem ersten Schritt wird das Ventil V1 geöffnet und Druckgas aus dem produktseitigen Gasstrom 14 gelangt in den Gasspeicher 22. Zu diesem Zeitpunkt ist ein dem Gasspeicher 22 nachgeschaltetes Ventil V5 geschlossen. Nach Beladung des Gasspeichers 22 (druckabhängige und/oder zeitabhängige Regelung bzw. Steuerung) wird das Ventil V1 geschlossen. Die Gasproduktion ist zu diesem Zeitpunkt gestoppt und eine Kühlung ist nicht mehr erforderlich. Über das Ventil V6 erfolgt eine teilweise oder gar vollständige Druckentlastung der Elektrolysevorrichtung 2. Zudem verdrängt das Gas aus dem Gasspeicher 22 das Wasser W aus der Kühlvorrichtung 20, das über die Elektrolyseeinheit 3 in den Gas-Wasser-Separator 12 gelangt und zunächst dort gelagert wird. Alternativ oder ergänzend dazu, wenn das Volumen des Gas-Wasser-Separators 12 zu gering ist, kann ein zusätzlicher Behälter zur Flüssigkeitsaufnahme verwendet werden. Dieser könnte für einen niedrigeren Druck ausgelegt sein. Bei kleinen, freien Volumen im Gas-Wasser-Separator 12 kann es zu einem Druckanstieg durch die einströmende Flüssigkeit kommen. In diesem Fall wird das Ventil V6 als Funktion des Drucks zur Druckhaltung im Gas-Wasser-Separators 12 geöffnet.

Eine weitere Möglichkeit besteht in der Schwerkraftentwässerung. Die treibende Kraft in der in der Figur gezeigten Ausführung ist der Höhenunterschied zw. Kühlvorrichtung 20 und dem Flüssigkeitsspeicher, in diesem Fall dem Gas-Wasser-Separator 12. Die Entleerung erfolgt analog zur forcierten "Entwässerung", dabei wird über das Ventil V5 Gas lediglich zur Vermeidung eines Unterdrucks bzw. zur Aufrechterhaltung eines definierten Überdrucks im System eingeleitet. Vorteilhaft in beiden Ausführungen ist das "Schrägstellen" der Kühlvorrichtung 20, um eine definierte Abfluss- und Einlaufrichtung zu bewirken.

Für beide nachfolgend beschriebenen Ausführungsbeispiele kann das Wiederanfahren bei sehr niedrigen Temperaturen kritisch sein, da bei einem zu langsamen Befüllen die Kühlvorrichtung 20 durch Vereisung in den Kühlkanälen verstopfen kann.

Gemäß einer ersten Ausführung wird der Elektrolyseprozess als Gasgenerator genutzt, um den Druck im Gas-Wasser-Separator 12 und im Gasspeicher 22 zu erhöhen. Ventile V2, V3, V5, V6 und V7 sind geschlossen, während Ventile V1 und V4 geöffnet sind. Das Prozesswasser W zirkuliert dabei in der Bypass-Leitung 24 und wird vorgewärmt. Im Gas-Wasser-Separator 12 und im Gasspeicher 22 wird Gasdruck aufgebaut. Beim Erreichen eines vordefinierten Mindestdrucks öffnet Ventil V2 und das geschlossene Ventil V7 sorgt für eine definierte Druckhaltung. Die Kühlvorrichtung 20 wird befüllt. V7 ist ein Druckhalteventil, das zur Druckentlastung geöffnet wird, den Druckabbau aber bei einem höheren Druck als dem Umgebungsdruck, z.B. 1,5 bar, stoppt.

Alternativ oder ergänzend kann ein Fremddruckbezug vorgesehen sein. Über einen externen, hier nicht gezeigten, Druckgasspeicher erfolgt die Druckbeaufschlagung des Systems über das Öffnen von Ventil V6 und ggf. Ventil V2. Für den Fall, dass in der Kühlvorrichtung ein Gasvolumen eingeschlossen ist, würde es, nach dem Druckaufbau und dem Öffnen von V2, nicht zu einem plötzlichen Druckausgleich kommen können. Das System wird vorgespannt und kann analog, wie bei der oben beschriebenen Eigendruckerzeugung befüllt werden.

Der Gasspeicher 22 kann entfallen, wenn auf eine externe Druckgasversorgung zurückgegriffen werden kann.

Auf der Anodenseite der Elektrolysevorrichtung 2 kann direkt Luft zur Verdrängung genutzt werden. Alternativ, sowohl auf der Katoden- als auch auf der Anodenseite kann auch Stickstoff aus einem Stickstoffsystem zur Verdrängung genutzt werden.

Das Ventil V7 kann zur Entlüftung erforderlich sein, wenn die in geringem Umfang verfrachteten Gasblasen durch die Strömung aus der Kühlvorrichtung 20 nicht ausgetragen werden. Oder optional befindet sich Im Zirkulationssystem ein Ionenaustauscher in Teil- oder Vollstrom.

## Patentansprüche

1. Verfahren zum Betreiben einer Elektrolysevorrichtung (2) zum Zerlegen von Wasser mit folgenden Schritten:
- Bereitstellen wenigstens einer Elektrolyseeinheit (3), umfassend wenigstens eine Elektrolysezelle, mit wenigstens einer Eingangsöffnung (6) für einen ersten Eduktstrom (4) und mit wenigstens einer Ausgangsöffnung (8) für einen ersten Produktstrom (P),
- Herstellen des ersten Produktstroms (P) aus dem ersten Eduktstrom (4) in der Elektrolyseeinheit (3),
- Trennen des Produktstroms (P) in einen Wasserstrom (W) und einen Gasstrom (G),
- Kühlen des Wasserstroms (W), indem er in wenigstens eine Kühlvorrichtung (20) eingeleitet wird, in der die Wärme des Wasserstroms (W) direkt an die Umgebung abgegeben wird,
- Unterbrechen der Kühlung des Wasserstroms (W) im Falle eines Abschaltens der Elektrolyseeinheit (3) oder im Stand-By-Betrieb der Elektrolyseeinheit (3), und
- Erfassen der Umgebungstemperatur und wenn die Umgebungstemperatur nahe am Gefrierpunkt ist, Entleeren des Wasserstroms (W) aus der Kühlvorrichtung (20) in einen Flüssigkeitsspeicher.

2. Verfahren nach Anspruch 1,
wobei die Kühlvorrichtung (20) durch einen Höhenunterschied zwischen der Kühlvorrichtung (20) und dem Flüssigkeitsspeicher entleert wird.

3. Verfahren nach Anspruch 2,
wobei das Wasser in der entleerten Kühlvorrichtung (20) durch ein Gas ersetzt wird.

4. Verfahren nach Anspruch 1,
wobei die Kühlvorrichtung (20) durch Beaufschlagen mit einem unter Druck stehendem Gas entleert wird, welches insbesondere ein Prozessgas ist.

5. Verfahren nach einem der vorhergehenden Ansprüche,
wobei als Flüssigkeitsspeicher ein Gas-Wasser-Separator (12) verwendet wird, in dem im Betrieb die Trennung des Wasserstroms (W) und des Gasstroms (G) erfolgt.

6. Verfahren nach einem der vorhergehenden Ansprüche,
wobei als Flüssigkeitsspeicher ein zusätzlicher Behälter eingesetzt wird.

7. Elektrolysevorrichtung (2) zum Zerlegen von Wasser umfassend:
- eine Elektrolyseeinheit (3), umfassend wenigstens eine Elektrolysezelle, mit wenigstens einer Eingangsöffnung (6) für einen ersten Eduktstrom (4) und mit wenigstens einer Ausgangsöffnung (8) für einen ersten Produktstrom (P),
- wenigstens einen Gas-Wasser-Separator (12) zum Trennen des Produktstroms (P) in einen Wasserstrom (W) und einen Gasstrom (G),
- eine Kühlvorrichtung (20) zum Kühlen des Wasserstroms (W), die für eine direkte Abgabe der Wärme des Wasserstroms (W) an die Umgebung ausgelegt ist,
- eine Steuereinheit (5), die dafür ausgebildet ist, die Kühlung des Wasserstroms (W) im Falle eines Abschaltens der Elektrolyseeinheit (3) oder im Stand-By-Betrieb der Elektrolyseeinheit (3) zu unterbrechen, und
- eine Temperaturmessvorrichtung zum Erfassen der Umgebungstemperatur, wobei die Steuereinheit (5) dafür eingerichtet ist, wenn die Umgebungstemperatur nahe am Gefrierpunkt ist, den Wasserstrom (W) aus der Kühlvorrichtung (20) in einen Flüssigkeitsspeicher zu entleeren.
